# EUROPEAN PATENT APPLICATION

(11) **EP 4 513 135 A1**
(43) Date of publication of application: **26.02.2025**
(21) Application number: 23936797.2
(22) Date of filing: 31.08.2023
(51) Int. Cl.: G01B 11/02

(54) **REBAR WELD INSPECTION METHOD AND DEVICE**

(30) Priority: 29.06.2023 CN 202310784424
(71) Applicant: Shanghai Mechanized Construction Group Co., Ltd., Shanghai 200072 (CN)
(72) Inventor: CHEN, Xiaoming, Hongkou District Shanghai 200080 (CN); MA, Liang, Shanghai 200072 (CN); ZHOU, Feng, Xuhui District Shanghai 200233 (CN); WANG, Li, Xuhui District Shanghai 200233 (CN); JIA, Baorong, Shanghai 200072 (CN); HUANG, Xiling, Xuhui District Shanghai 200233 (CN); YUAN, Shanshan, Xuhui District Shanghai 200233 (CN); XU, Bin, Xuhui District Shanghai 200233 (CN); LUO, Haiyan, Xuhui District Shanghai 200233 (CN); ZHOU, Feng, Shanghai 200072 (CN); LI, Jiqing, Shanghai 200072 (CN); LIU, Wei, Shanghai 200072 (CN); SHEN, Zexin, Shanghai 200072 (CN)
(74) Representative: Ullrich & Naumann PartG mbB
(86) International application number: PCT/CN2023/116182
(87) International publication number: WO 2025/000683

(57) **Abstract**

A method and a device for detecting a steel bar weld seam, relates to a technical field of weld seam detection. The method is used in a device for detecting a weld seam, and includes: obtaining a first point cloud data of a detection area, the first point cloud data includes a plurality of discrete point data, and the discrete point data includes color values and plane coordinates; determining a plurality of contour points of the weld seam to be detected according to the first point cloud data; obtaining a size information of the weld seam to be detected based on the plane coordinates corresponding to each of the plurality of contour points, the size information includes a length and width of the weld seam to be detected; and if the size information meets preset conditions, determining the weld seam to be detected as a qualified weld seam. This solution can achieve quantitative detection of the weld seam, thereby improving a detection efficiency of the weld seam.

## Description

### TECHNICAL FIELD

The present application relates to a technical field of weld seam detection, and in particular, relates to a method and a device for detecting a steel bar weld seam.

### BACKGROUND ART

Steel bar, as a type of steel used for manufacturing steel reinforced concrete and prestressed steel reinforced concrete, is particularly common in construction sites and widely used in various building structures.

When using steel bars on site, it is necessary to construct the steel bars into a steel cage or other specific shapes, and an additional welding treatment is required during a construction process to ensure a reliability and firmness of finished products and avoid safety accidents, therefore, it is extremely necessary to detect the weld seam after welding. The most common method for detecting the weld seam currently is manual detection, where workers judge the reliability of the weld seam through eye-measurement and straightedge measurement.

However, different people may have different judgments on a quality of weld seams, making it difficult to form quantifiable quality standards, resulting in lower detection efficiency.

Therefore, there is an urgent need for an efficient and accurate method and device for detecting the steel bar weld seam.

### SUMMARY

The present application provides a method and a device for detecting a steel bar weld seam, which can achieve quantitative detection of the weld seam, thereby improving a detection efficiency of the weld seam.

In a first aspect, the present application provides a method for detecting a steel bar weld seam, using in a device for detecting a weld seam, including: obtaining a first point cloud data of a detection area, the first point cloud data includes a plurality of discrete point data, and the discrete point data includes color values and plane coordinates; determining a plurality of contour points of the weld seam to be detected according to the first point cloud data; obtaining a size information of the weld seam to be detected based on the plane coordinates corresponding to each of the plurality of contour points, the size information comprises a length and width of the weld seam to be detected; if the size information meets preset conditions, determining the weld seam to be detected as a qualified weld seam.

By adopting the above technical solution, the device for detecting the weld seam obtains an outer contour of the weld seam to be detected according to the point cloud data of the detection area, thereby determining a position and the outer contour of the weld seam to be detected, and then obtains the size information of the weld seam to be detected according to a point set on the outer contour. As a result, in a process of a large number of weld seam detections, labor costs are saved while reducing misjudgments caused by manual detection. Finally, the size information is compared with the preset conditions to determine whether the weld seam to be detected is qualified, thereby unifying quality standards and achieving simple and efficient weld seam detecting.

In a second aspect, the present application provides a device for detecting a steel bar weld seam, including a detection module and a data processing module, wherein:
the detection module is configured for obtaining a first point cloud data of a detection area, the first point cloud data includes a plurality of discrete point data, and the discrete point data includes color values and plane coordinates; and
the data processing module is configured for determining a plurality of contour points of the weld seam to be detected according to the first point cloud data; obtaining a size information of the weld seam to be detected based on the plane coordinates corresponding to each of the plurality of contour points, the size information includes a length and width of the weld seam to be detected; and if the size information meets preset conditions, determining the weld seam to be detected as a qualified weld seam.

By adopting the above technical solution, the detection module obtains the outer contour of the weld seam to be detected according to the point cloud data of the detection area, thereby determining the position and outer contour of the weld seam to be detected, the data processing module then obtains the size information of the weld seam to be detected according to the point set on the outer contour. As a result, in the process of a large number of weld seam detections, labor costs are saved while reducing misjudgments caused by manual detection. Finally, the size information is compared with the preset conditions to determine whether the weld seam to be detected is qualified, thereby unifying the quality standards and achieving simple and efficient weld seam detecting.

Optionally, before obtaining the first point cloud data of the detection area, which specifically includes: the detection module is configured for obtaining a second point cloud data of an initial area, the second point cloud data includes a plurality of initial discrete point data; the data processing module is configured for determining a center position information corresponding to each of a plurality of preset markers based on the second point cloud data, the preset marker is a marker point composed of a plurality of identification discrete points that form a preset shape, a number of the preset markers is at least 3; and obtaining the detection area according to the center position information corresponding to each of the plurality of preset markers.

By adopting the above technical solution, due to the initial area is large, when the detection module identifies the detection area where the weld seam to be detected is located from the initial area, the detection module determines the position of the detection area by identifying the marker point to be preseted of the preset shape in the initial area; subsequently, only the point cloud data within the detection area needs to be processed, simplifying a complexity of data processing and shortening a processing time.

Optionally, the detection module is configured for comparing the color values corresponding to each of the plurality of initial discrete point data with a preset color value to obtain the plurality of identification discrete points that form the preset shape; the data processing module is configured for fitting the plane coordinates of the plurality of identification discrete points to obtain contour lines of a plurality of preset shapes; and determining the center position information corresponding to each of the plurality of preset markers based on the contour lines of the plurality of preset shapes.

By adopting the above technical solution, due to a fact that the initial area not only includes preset marker points and weld seams, but also other production tools. At this point, by setting the marker points to the preset shapes, an accurate position of each marker point can be determined by identifying the preset shapes when identifying the marker points, and the accurate position of the detection area can be obtained, reducing detection impacts caused by external factors.

Optionally, the detection module is configured for obtaining a plurality of sets of point cloud data within the detection area, wherein the plurality of sets of point cloud data are collected at different time points in a same environment; the data processing module is configured for performing a point cloud registration on the plane coordinates of a third point cloud data to obtain a registered point cloud data according to a reference point cloud data, the third point cloud data is any one of the plurality of sets of point cloud data, and the reference point cloud data is any one of the plurality of sets of point cloud data except for the third point cloud data; and calculating an average of the reference point cloud data and the registered point cloud data to obtain the first point cloud data.

By adopting the above technical solution, when obtaining the point cloud data in the detection area, a plurality of collections are required to reduce outliers in collected data. At this point, the detection module performs the point cloud registration between the data collected a plurality of times and the reference point cloud data to obtain an accurate point cloud data with fewer outliers, thereby improving an accuracy of weld seam detection.

Optionally, the data processing module is configured for obtaining a color value of a sample discrete point data, the sample discrete point data is any one of the plurality of discrete point data; and if the color value of the sample discrete point data is within a range of a preset weld seam color value, then determining sample discrete points as the contour points of the weld seam to be detected.

By adopting the above technical solution, the data processing module compares the color value of the sample discrete point with the range of the preset weld seam color value to determine whether the discrete points are contour points of the weld seam to be detected; at this point, an accuracy of weld size detection is improved.

Optionally, the data processing module is configured for performing function fitting on the plane coordinates corresponding to each of the plurality of contour points to obtain fitted curves; determining outer contour lines of the weld seam to be detected according to the fitted curves; and determine the size information of the weld seam to be detected based on the outer contour lines.

By adopting the above technical solution, by fitting the plurality of contour points of the weld seam to a curve, and then obtaining the size information of the weld seam to be detected according to a set of points on the fitted curve, thereby reducing an influence of errors caused by contour points on judgment results.

Optionally, when the length of the weld seam to be detected is within a range of a preset length and the width of the weld seam to be detected is within a range of a preset width, determining the weld seam to be detected is the qualified weld seam.

By adopting the above technical solution, the quality standards of the weld seam detection is unified, and the detection efficiency of the weld seam is improved.

In a third aspect, the present application provides an electronic device, including a processor, a memory, a user interface, and a network interface, the memory is configured to store instructions, the user interface and the network interface are configured to communicate with other devices, and the processor is configured to execute the instructions stored in the memory to enable the electronic device to perform any one of the methods described in the first aspect.

In a fourth aspect, the present application provides a computer-readable storage medium, the computer-readable storage medium stores instructions, and when the instructions are executed, the method described in any one of the first aspect is executed.

In summary, one or more technical solutions provided in embodiments of the present application have at least the following technical effects or advantages.
1. The device for detecting the weld seam obtains the outer contour of the weld seam to be detected according to the point cloud data of the detection area, thereby determining the position and the outer contour of the weld seam to be detected, and then obtains the size information of the weld seam to be detected according to the point set on the outer contour. As a result, in the process of the large number of weld seam detections, labor costs are saved while reducing misjudgments caused by manual detection. Finally, the size information is compared with the preset conditions to determine whether the weld seam to be detected is qualified, thereby unifying quality standards and achieving simple and efficient weld seam detecting.
2. Due to the fact that the initial area not only includes preset marker points and weld seams, but also other production tools. At this point, by setting the marker points to the preset shapes, the accurate position of each marker point can be determined by identifying the preset shapes when identifying the marker points, and the accurate position of the detection area can be obtained, reducing detection impacts caused by external factors.

### BRIEF DESCRIPTION OF THE DRAWINGS

FIG. 1 is a schematic structure view of a device for detecting a weld seam according to an embodiment of the present application.
FIG. 2 is a flow chart of a method for detecting a weld seam according to an embodiment of the present application.
FIG. 3 is a flow chart of a method of dividing a detection area of a weld seam according to an embodiment of the present application.
FIG. 4 is a schematic structure view of a device for detecting a weld seam according to an embodiment of the present application.
FIG. 5 is a schematic structure view of an electronic device according to an embodiment of the present application.

List of reference signs: 1. detection module; 2. data processing module; 3. electric pan-tilt; 500. electronic device; 501. processor; 502. communication bus; 503. user interface; 504. network interface; 505. memory.

### DETAILED DESCRIPTION

In order to enable those skilled in the art to better understand the technical solutions in this description, the following will provide a clear and complete description of the technical solutions in the embodiments of the description with reference to the drawings, obviously, the embodiments described are only a part of the embodiments of the present application, not all of the embodiments.

In a description of the embodiments of the present application, words such as "for example" or "for instance" are used to indicate examples, illustrations, or clarifications. Any embodiments or design schemes described as "for example" or "for instance" in the present application should not be interpreted as being more preferred or advantageous than other embodiments or design schemes. Specifically, a use of words such as "for example" or "for instance" is intended to present relevant concepts in a concrete way.

In the description of the embodiments of the present application, the term "a plurality of" refers to two or more. For example, a plurality of systems refer to two or more systems, and a plurality of screen terminals refer to two or more screen terminals. In addition, the terms "first" and "second" are only used for descriptive purposes and cannot be understood as indicating or implying relative importance or implying the technical features indicated. Thus, the features limited to "first" and "second" may explicitly or implicitly include one or more of these features. The terms "including", "containing", "having", and variations thereof all mean "including but not limited to", unless otherwise specifically emphasized.

Steel bar refers to the steel used in steel reinforced concrete and prestressed steel reinforced concrete, which is particularly common in construction sites and widely used in various building structures, especially large, heavy, lightweight thin-walled and high-rise building structures. When using steel bars on site, the steel bars need to be constructed into steel cages or other specific shapes, and an additional welding treatment is required during a construction process. In order to ensure a reliability and firmness of finished products after construction and avoid safety accidents, it is extremely necessary to detect the weld seam after welding.

The most common method for detecting the weld seam currently is manual detection, where workers judge the reliability of the weld seam through eye-measurement and straightedge measurement. However, manual detection can easily lead to misjudgments, omissions, and low efficiency, and judgment results of different people may be different, making it difficult to form quantifiable quality standards, resulting in lower detection efficiency.

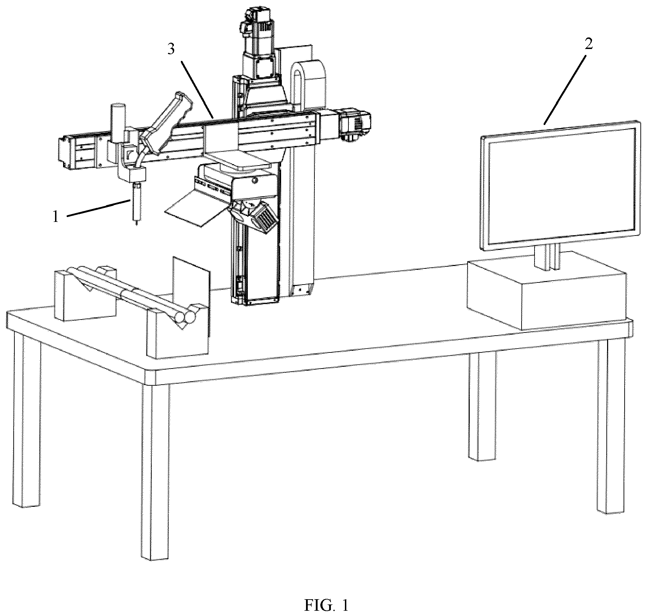

Before illustrating the embodiments of the present application, the present application provides a schematic structure view of a device for detecting a weld seam. Referring to FIG. 1, the device for detecting the weld seam includes a detection module 1, a data processing module 2, and an electric pan-tilt 3. Wherein, the detection module 1 is a 3D laser depth camera for digital data acquisition of objects within a detection range; the data processing module 2 is configured to process a collected data, operate the electric pan-tilt, extract and judge a information of the weld seam, and display results; the electric pan-tilt 3 is configured to fix the detection device and can rotate from multiple angles to achieve an optimal detection angle, and can be adapted to different welding robots and installed on robotic arms.

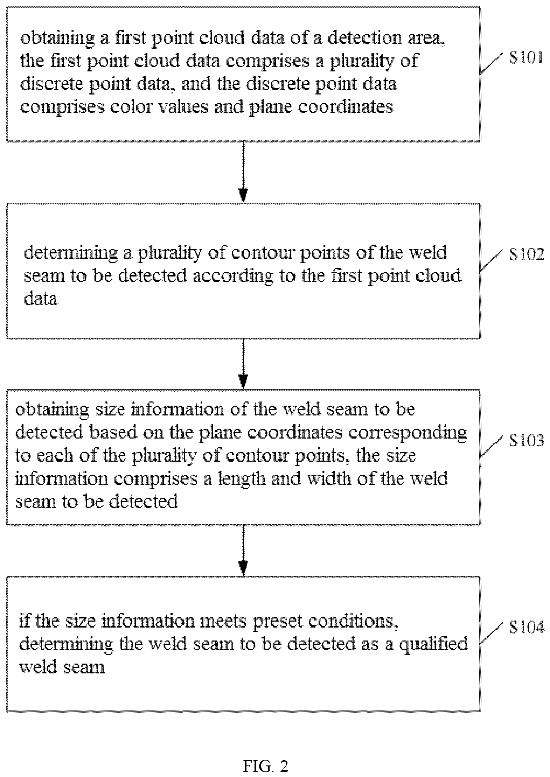

In order to solve the above problems, the present application provides a method for detecting a steel bar weld seam, the method can be used in a device for detecting the steel bar weld seam, referring to FIG. 2, the method includes steps S101 to S104.

S101, obtaining a first point cloud data of a detection area, the first point cloud data includes a plurality of discrete point data, and the discrete point data includes color values and plane coordinates.

In the above steps, after a welding is completed, workers fix the steel bar to be detected on a detecting table. At this point, the data processing module 2 adjusts the electric pan-tilt 3 according to the point cloud data collected by the detection module 1, so that the detection area of the detection module 1 covers an area where the weld seam to be detected is located, and the area is centered in a middle of the detection area, thereby achieving an optimal detection angle. At this point, the detection module 1 obtains the point cloud data of an initial area.

After obtaining the point cloud data of the initial area, due to a large number of useless blank areas contained in the initial area, it is necessary to simplify a complexity of data processing and shorten the data processing time. The detection module 1 obtains the point cloud data of the initial area, wherein the point cloud data can be understood as a set of point data obtained by measuring instruments on a surface of a product appearance in reverse engineering. Therefore, the point cloud data of the initial area includes a plurality of initial discrete point data, each of which includes the color values and plane coordinates of the discrete point. Then, the data processing module 2 compares the color values corresponding to each of the plurality of initial discrete point data with a preset color value according to the point cloud data of the initial area, obtaining a plurality of identification discrete points that form preset shapes; then, the data processing module 2 fits the plane coordinates of the plurality of identification discrete points to obtain contour lines of a plurality of preset shapes. Finally, based on the contour lines of the preset shapes, the data processing module 2 calculates a center position information corresponding to each of a plurality of preset marker points in the initial area. At this point, the detection area is the area obtained by connecting center positions of the plurality of preset marker points. In this process, excess blank areas in the initial area are removed, thereby reducing an amount of data processing and speeding up data processing speed. Wherein, a plurality of preset markers can be understood as marker points that form the preset shapes by identification discrete points, and identification discrete points as a part of a plurality of initial discrete points. The center position information can be a center of gravity of the preset shape. A number of the preset markers is at least 3.

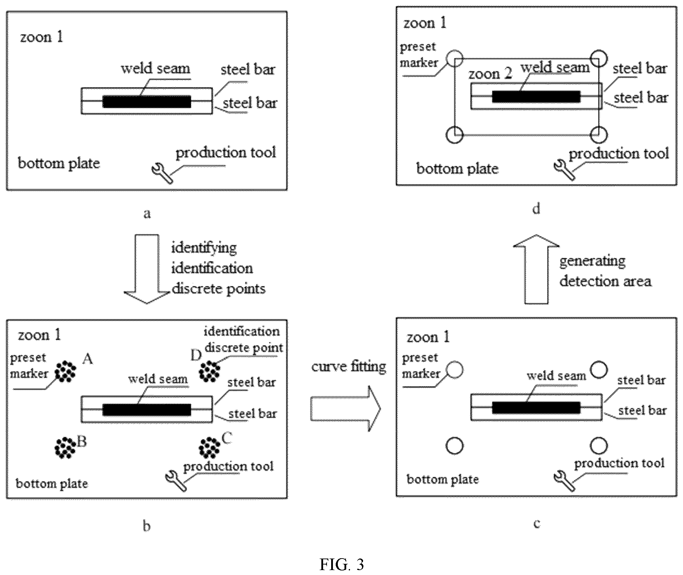

For example, referring to FIG. 3, Figure a is the initial area, which includes a steel bar, a weld seam, a bottom plate, and a production tool. At this point, the bottom plate and the production tool in Figure a may cause misjudgment in an identification of weld seams during data processing. Therefore, in Figure b, the device for detecting the weld seam processes the point cloud data of the initial area to obtain four preset markers: A, B, C, and D. Then, referring to Figure c, the four preset markers are fitted with curves to obtain their respective outer contour lines. Finally, referring to Figure d, the center positions of the four preset markers are connected to obtain an area 2, which is the detection area.

In a process of identifying the preset markers, the preset shapes can be provided as circular, square, or polygonal, and the present application does not limit it. Due to a fact that the initial area not only includes the weld seam to be detected, but also includes a detection tool and other production tools such as the bottom plate, and colors, positions, and shapes of these production tools are different, thereby leading errors in the identification of the detection module 1 by the production tools. Therefore, by providing the preset shapes, in an identification process of the detection module 1, the plurality of initial discrete points that form the preset shapes are configured as markers, thereby determining the detection area that contains the weld seam to be detected and has fewer production tools. In this process, points are no longer configured as markers, but the preset shapes are configured as markers, which not only increases the identification of markers, but also greatly reduces a possibility of misjudgment of marker points.

S 102, determining a plurality of contour points of the weld seam to be detected according to the first point cloud data.

In the above steps, after obtaining the point cloud data of the detection area, the color values of sample discrete point data are compared with a range of preset weld seam color values, if the color values of the sample discrete point data are within the range of preset weld seam color values, then the sample discrete point is determined as the contour point of the weld seam to be detected. Wherein, the sample discrete point refers to any one of the plurality of discrete point data within the detection area, and a color value of the sample discrete point can be understood as a RGB value of the discrete point. Thus, an approximate shape of the weld seam to be detected is obtained. Of course, due to the discrete point data not only includes color values, but also includes point information such as reflectivity and intensity. Therefore, when high precision is required for the weld seam, in order to obtain accurate contour points, more dimensional comparisons can be made, a specific judgment criteria depend on an actual situation and will not be repeated here.

S103, based on the plane coordinates corresponding to each of the plurality of contour points, obtaining a size information of the weld seam to be detected, the size information includes a length and width of the weld seam to be detected.

In the above steps, since the contour points of the weld seam to be detected can only obtain the approximate shape, in order to obtain more accurate dimensions of the weld seam, the plane coordinates corresponding to each of the plurality of contour points are curve fitted, thereby obtaining a fitted curve. In this process, if the plane coordinates of the contour point are not on the fitted curve, the contour point will be projected onto the fitted curve. At this point, the fitted curve is an outer contour line of the weld seam to be detected. Wherein, spline curve fitting or polynomial fitting can be used for curve fitting. As the curve fitting is a conventional technical means for those skilled in the art, it will not be repeated in this embodiment.

In order to determine the size information of the weld seam to be detected, the device for detecting the weld seam calculates a coordinate position of each contour point on the fitted curve according to an equation of the fitted curve, thereby calculating the width and length of the weld seam, the width is a distance between two farthest points in a width direction of the weld seam to be detected, and the length is a distance between two farthest points in a length direction of the weld seam to be detected.

S104, if the size information meets preset conditions, determining the weld seam to be detected as a qualified weld seam.

In the above steps, the preset conditions can be understood as engineering quality acceptance criteria of the weld seam, and welding requirements for different steel bars are different. For example, for truss steel bars, the engineering quality acceptance criteria of the weld seam are: a welding length for double-sided welding is 5d, a welding length for single-sided welding is 10d, and an error range is -5mm to 5mm. For example, if a diameter d of the steel bar is 30mm, single-sided welding is adopted; a required length of the weld seam is 300mm, if the length of the weld seam is 299mm at this time, the weld seam is qualified.

In a possible embodiment, obtaining the first point cloud data of the detection area further includes: obtaining a plurality of sets of point cloud data within the detection area, wherein the plurality of sets of point cloud data are collected at different time points in a same environment; according to a reference point cloud data, performing a point cloud registration on the plane coordinates of a third point cloud data to obtain a registered point cloud data, the third point cloud data is any one of the plurality of sets of point cloud data, and the reference point cloud data is any one of the plurality of sets of point cloud data except for the third point cloud data; and calculating an average of the reference point cloud data and the registered point cloud data to obtain the first point cloud data.

Specifically, when obtaining the point cloud data for the detection area, a plurality of collections are required to reduce outliers in collected data, the point cloud data collected a plurality of times, even in the same environment, still has different data collected at different time points. For example, the point cloud data which is collected at a first moment includes a first discrete point, and the point cloud data which is collected at a second moment includes a second discrete point. Wherein, the first discrete point and the second discrete point are both discrete points at a same position, and the second moment is after the first moment. However, due to measurement errors of the detection module 1, there is a deviation in a position of the first discrete point and the second discrete point. At this point, the position of the second discrete point is replaced by other discrete points, resulting in measurement errors. Therefore, the detection module 1 performs a point cloud registration on the plane coordinates of the third point cloud data according to the reference point cloud data to obtain the registered point cloud data. Wherein, the reference point cloud data can be any one of the plurality of sets of point cloud data to be collected. The third point cloud data is the point cloud data that requires the point cloud registration. After registering all point cloud data, calculating the average of the reference point cloud data and the registered point cloud data to obtain the first point cloud data of the detection area. In this process, there are fewer outliers in the first point cloud data and the data is accurate, thereby improving an accuracy of weld seam detection.

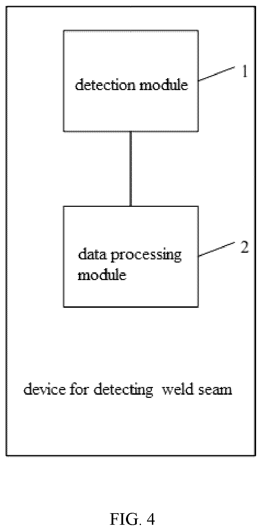

The present application provides a device for detecting a steel bar weld seam, referring to FIG. 4, the device for detecting the weld seam includes a detection module 1 and a data processing module 2, wherein:
the detection module 1 is configured for obtaining the first point cloud data of the detection area, the first point cloud data includes the plurality of discrete point data, and the discrete point data include color values and plane coordinates; and
the data processing module 2 is configured for determining the plurality of contour points of the weld seam to be detected according to the first point cloud data; obtaining the size information of the weld seam to be detected based on the plane coordinates corresponding to each of the plurality of contour points, the size information includes the length and width of the weld seam to be detected; and if the size information meets the preset conditions, determining the weld seam to be detected as a qualified weld seam.

In a possible embodiment, before obtaining the first point cloud data of the detection area, which specifically includes: the detection module 1 is configured for obtaining a second point cloud data of the initial area, the second point cloud data includes the plurality of initial discrete point data; the data processing module 2 is configured for determining the center position information corresponding to each of the plurality of preset markers based on the second point cloud data, the preset marker is a marker point composed of the plurality of identification discrete points that form the preset shape, and the number of the preset markers is at least 3; and obtaining the detection area according to the center position information corresponding to each of the plurality of preset markers.

In a possible embodiment, the detection module 1 is configured for comparing the color values corresponding to each of the plurality of initial discrete point data with a preset color value to obtain the plurality of identification discrete points that form the preset shapes; the data processing module 2 is configured for fitting the plane coordinates of the plurality of discrete points to obtain contour lines of the plurality of preset shapes; and determining the center position information corresponding to each of the plurality of preset markers based on the contour lines of the plurality of preset shapes.

In a possible embodiment, the detection module 1 is configured for obtaining the plurality of sets of point cloud data within the detection area, wherein the plurality of sets of point cloud data are collected at different time points in the same environment; the data processing module 2 is configured for performing the point cloud registration on the plane coordinates of the third point cloud data to obtain the registered point cloud data according to the reference point cloud data, the third point cloud data is any one of the plurality of sets of point cloud data, and the reference point cloud data is any one of the plurality of sets of point cloud data except for the third point cloud data; and calculating the average of the reference point cloud data and the registered point cloud data to obtain the first point cloud data.

In a possible embodiment, the data processing module 2 is configured for obtaining the color values of the sample discrete point data, the sample discrete point data is any one of the plurality of discrete point data; and if the color values of the sample discrete point data is within the range of the preset weld seam color values, then determining the sample discrete points as the contour points of the weld seam to be detected.

In a possible embodiment, the data processing module 2 is configured for performing function fitting on the plane coordinates corresponding to each of the plurality of contour points to obtain fitted curves; determining the outer contour lines of the weld seam to be detected according to the fitted curves; and determining the size information of the weld seam to be detected based on the outer contour lines.

In a possible embodiment, when the length of the weld seam to be detected is within a range of a preset length and the width of the weld seam to be detected is within a range of a preset width, determining the weld seam to be detected is the qualified weld seam.

It should be noted that the device provided in the above embodiments only illustrates a division of each functional module when implementing its functions, in practical applications, the above functions can be assigned to different functional modules as needed, that is, an internal structure of the device can be divided into different functional modules to complete all or part of the functions described above. In addition, the embodiments of the device and method provided in the above embodiments belong to a same concept, and a specific implementation process is detailed in the method embodiments, which will not be further repeated here.

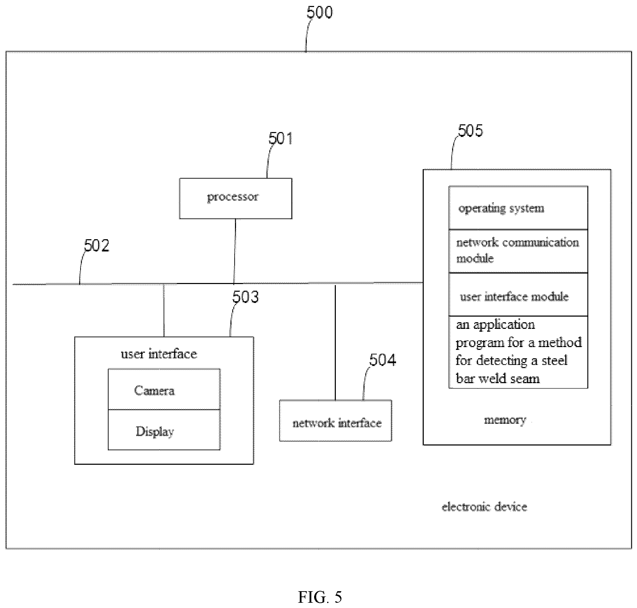

The present application further discloses an electronic device. Referring to FIG. 5, FIG. 5 is a schematic structure view of an electronic device disclosed in an embodiment of the present application. The electronic device 500 may include: at least one processor 501, at least one network interface 504, a user interface 503, a memory 505, and at least one communication bus 502.

Wherein, the communication bus 502 is configured to achieve connection communication between these components.

Wherein, the user interface 503 can include a display and a camera; and optionally, the user interface 503 can further include a standard wired interface and a standard wireless interface.

Wherein, optionally, the network interface 504 can include the standard wired interface and the standard wireless interface (such as a WI-FI interface).

Wherein, the processor 501 may include one or more processing cores. The processor 501 utilizes various interfaces and lines to connect various parts of an entire server, and executes various functions of the server and processes data by running or executing instructions, programs, code sets, or instruction sets stored in the memory 505, as well as calling data stored in the memory 505. Optionally, the processor 501 can be implemented in at least one hardware form from Digital Signal Processing (DSP), Field-Programmable Gate Array (FPGA), and Programmable Logic Array (PLA). The processor 501 can integrate one or a combination of Central Processing Units (CPU), Graphics Processing Units (GPU), and modem. Wherein, the CPU mainly processes an operating system, a user interface, and an application program; the GPU is configured to render and draw content that needs to be displayed on the display; the modem is configured to handle wireless communication. It can be understood that the above modem may not be integrated into the processor 501 and can be implemented separately through a single chip.

Wherein, the memory 505 can include Random Access Memory (RAM) or Read-Only Memory (ROM). Optionally, the memory 505 includes a non-transitory computer-readable storage medium. The memory 505 can be used to store instructions, programs, code, code sets, or instruction sets. The memory 505 may include a storage program area and a storage data area, wherein the storage program area may store instructions for implementing the operating system, instructions for at least one function (such as touch function, sound playback function, image playback function, etc.), instructions for implementing various method embodiments mentioned above, etc; the storage data area can store the data involved in the various method embodiments mentioned above. Optionally, the memory 505 can also be at least one storage device located departing from the processor 501 mentioned above. Referring to FIG. 5, the memory 505 as a computer storage medium may include an operating system, a network communication module, a user interface module, and an application program for a method for detecting the weld seam .

In the electronic device 500 shown in FIG. 5, the user interface 503 is mainly configured to provide an input interface for a user and obtain a data input by the user; the processor 501 can be configured to call the application program stored in the memory 505 for the method for detecting the weld seam, when the application program is executed by one or more processors 501, the electronic device 500 is caused to execute one or more of the methods mentioned in the above embodiments. It should be noted that for the method embodiments mentioned above, in order to simplify the description, they are all described as a series of action combinations, however, those skilled in the art should be aware that the present application is not limited by an order of described actions, as certain steps may be performed in other orders or simultaneously according to the present application. Secondly, those skilled in the art should also be aware that the embodiments described in the description are all preferred embodiments, and the actions and modules involved may not necessarily be necessary for the present application.

In the above embodiments, descriptions of each embodiment have their own emphasis. For a part that is not detailed in one embodiment, please refer to relevant descriptions of other embodiments.

In the several embodiments provided in the present application, it should be understood that a disclosed device can be implemented in other ways. For example, the device embodiments described above are only illustrative, such as division of units, which is only a logical function division, in practical implementation, there may be other division methods, such as multiple units or components being combined or integrated into another system, or some features being ignored or not executed. On the other hand, a mutual coupling or direct coupling or communication connection displayed or discussed can be indirect coupling or communication connection through some service interfaces, devices or units, which can be electrical or other forms.

Units described as separate components may or may not be physically separated, and components displayed as units may or may not be physical units, that is, which can be located in one place or distributed across multiple network units. Some or all of the units can be selected according to actual needs to achieve a purpose of the embodiment.

In addition, functional units in various embodiments of the present application can be integrated into one processing unit, physically exist separately, or integrate two or more units into one unit. Integrated units mentioned above can be implemented in a form of hardware or software functional units.

When the integrated units are implemented in the form of software functional units and sold or used as independent products, which can be stored in a computer-readable memory. Based on this understanding, a technical solution of the present application can essentially or partially contribute to an existing technology, or all or part of the technical solution can be embodied in a form of a software product, this computer software product is stored in a memory and includes several instructions to enable a computer device (which can be a personal computer, server, or network device, etc.) to perform all or part of steps of the various embodiments of the present application. The storage device mentioned above include various media such as USB flash drives, portable hard drives, magnetic disks, optical disks, or other media that can store program code.

The above is only an exemplary embodiment of the present disclosure and cannot be used to limit a scope of the present disclosure. However, any equivalent changes and modifications made in accordance with teachings disclosed herein are still within the scope of the present disclosure. Those skilled in the art will easily come up with other implementation schemes of the present disclosure after considering the disclosure of the specification and practical truths.

The present application is intended to cover any variations, uses, or adaptive changes of the present disclosure, which follow the general principles of the present disclosure and include common knowledge or customary technical means in the art not disclosed in the present disclosure. The description and embodiments are only considered exemplary, and the scope and spirit of the presrnt disclosure are limited by the claims.

## Claims

1. A method for detecting a steel bar weld seam, **characterized by** using in a device for detecting a weld seam, comprising:
obtaining a first point cloud data of a detection area, the first point cloud data comprises a plurality of discrete point data, and the discrete point data comprises color values and plane coordinates;
determining a plurality of contour points of the weld seam to be detected according to the first point cloud data;
obtaining a size information of the weld seam to be detected based on the plane coordinates corresponding to each of the plurality of contour points, the size information comprises a length and width of the weld seam to be detected; and
if the size information meets preset conditions, determining the weld seam to be detected as a qualified weld seam.

2. The method according to claim 1, **characterized in that**, before obtaining the first point cloud data of the detection area, the method comprises:
obtaining a second point cloud data of an initial area, the second point cloud data comprises a plurality of initial discrete point data;
determining a center position information corresponding to each of a plurality of preset markers based on the second point cloud data, the preset marker is a marker point composed of a plurality of identification discrete points that form a preset shape, a number of the preset markers is at least 3; and
obtaining the detection area according to the center position information corresponding to each of the plurality of preset markers.

3. The method according to claim 2, **characterized in that**, determining the center position information of the plurality of preset markers based on the second point cloud data comprises:
comparing the color values corresponding to each of the plurality of initial discrete point data with a preset color value to obtain the plurality of identification discrete points that form the preset shape;
fitting the plane coordinates of the plurality of identification discrete points to obtain contour lines of a plurality of preset shapes; and
determining the center position information corresponding to each of the plurality of preset markers based on the contour lines of the plurality of preset shapes.

4. The method according to claim 1, **characterized in that**, obtaining the first point cloud data of the detection area comprises:
obtaining a plurality of sets of point cloud data within the detection area, wherein the plurality of sets of point cloud data are collected at different time points in a same environment;
performing a point cloud registration on the plane coordinates of a third point cloud data to obtain a registered point cloud data according to a reference point cloud data, the third point cloud data is any one of the plurality of sets of point cloud data, and the reference point cloud data is any one of the plurality of sets of point cloud data except for the third point cloud data; and
calculating an average of the reference point cloud data and the registered point cloud data to obtain the first point cloud data.

5. The method according to claim 1, **characterized in that**, determining the plurality of contour points of the weld seam to be detected according to the first point cloud data comprises:
obtaining a color value of a sample discrete point data, the sample discrete point data is any one of the plurality of discrete point data; and
if the color value of the sample discrete point data is within a range of a preset weld seam color value, then determining sample discrete points as the contour points of the weld seam to be detected.

6. The method according to claim 1, **characterized in that**, obtaining the size information of the weld seam to be detected based on the plane coordinates corresponding to each of the plurality of contour points comprises:
performing function fitting on the plane coordinates corresponding to each of the pluralityof contour points to obtain fitted curves;
determining outer contour lines of the weld seam to be detected according to the fitted curves; and
determining the size information of the weld seam to be detected based on the outer contour lines.

7. The method according to claim 1, **characterized in that**, if the size information meets the preset conditions, determining the weld seam to be detected as the qualified weld seam comprises:
when the length of the weld seam to be detected is within a range of a preset length and the width of the weld seam to be detected is within a range of a preset width, determining the weld seam to be detected is the qualified weld seam.

8. A device for detecting a steel bar weld seam, **characterized by** comprising: a detection module (1) and a data processing module (2), wherein:
the detection module (1) is configured for obtaining a first point cloud data of a detection area, the first point cloud data comprises a plurality of discrete point data, and the discrete point data comprises color values and plane coordinates; and
the data processing module (2) is configured for determining a plurality of contour points of the weld seam to be detected according to the first point cloud data; obtaining a size information of the weld seam to be detected based on the plane coordinates corresponding to each of the plurality of contour points, the size information comprises a length and width of the weld seam to be detected; and if the size information meets preset conditions, determining the weld seam to be detected as a qualified weld seam.

9. An electronic device, **characterized by** comprising a processor (501), a memory(505), a user interface (503), and a network interface (504), the memory (505) is configured to store instructions, the user interface (503) and the network interface (504) are configured to communicate with other devices, and the processor (501) is configured to execute the instructions stored in the memory (505) to enable the electronic device (500) to perform the method according to any one of claims 1 to 7.

10. A computer-readable storage medium, **characterized in that**, the computer-readable storage medium stores instructions, and when the instructions are executed, the method according to any one of claims 1 to 7 is executed.
